# EUROPEAN PATENT APPLICATION

(11) **EP 4 775 475 A1**
(43) Date of publication of application: **15.07.2026**
(21) Application number: 24861823.3
(22) Date of filing: 20.08.2024
(51) Int. Cl.: B62D 25/20

(54) **REAR LONGITUDINAL BEAM ASSEMBLY AND VEHICLE**

(30) Priority: 05.09.2023 CN 202311143706; 05.09.2023 CN 202311143645
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LIANG, Xinyu, Ningbo, Zhejiang 315899 (CN); LU, Chuanfei, Ningbo, Zhejiang 315899 (CN); OU, Tianqiao, Ningbo, Zhejiang 315899 (CN); LIU, Jiaxin, Ningbo, Zhejiang 315899 (CN); SONG, Yadong, Ningbo, Zhejiang 315899 (CN); LI, Tianqi, Ningbo, Zhejiang 315899 (CN); YU, Jiang, Ningbo, Zhejiang 315899 (CN)
(74) Representative: Boult Wade Tennant LLP
(86) International application number: PCT/CN2024/113492
(87) International publication number: WO 2025/050979

(57) **Abstract**

A rear longitudinal beam assembly (10) and a vehicle, where one end of a first longitudinal beam section (100) is connected to a sill beam (20), the other end of the first longitudinal beam section (100) is connected to a second longitudinal beam section (200), and an end of the second longitudinal beam section (200) away from the first longitudinal beam section (100) is connected to a rear panel (30). The first longitudinal beam section (100) is disposed obliquely relative to the sill beam (20), the second longitudinal beam section (200) is parallel to the sill beam (100) and is closer to a top of the vehicle body relative to the sill beam (20). A side of the second longitudinal beam section (200) facing the top of the vehicle body is a first side wall (210). One end of a first induction structure (300) is connected to the first side wall (210), the other end of the first induction structure (300) is connected to the rear panel (30), and the first induction structure (300) is configured to suppress the second longitudinal beam section (200) from lifting towards the top of the vehicle body. The rear longitudinal beam assembly (10) of such a configuration can improve the effect of transmitting an impact force from the rear longitudinal beam assembly (10) to the sill beam (20), and enhance the impact resistance of the rear longitudinal beam assembly (10), the strength of the vehicle, and riding safety of a user.

## Description

The present disclosure claims priority to Chinese Patent Application No. 202311143706.9, filed with the China National Intellectual Property Administration on September 5, 2023, entitled "REAR LONGITUDINAL BEAM ASSEMBLY AND VEHICLE", which is hereby incorporated by reference in its entirety.

The present disclosure claims priority to Chinese Patent Application No. 202311143645.6, filed with the China National Intellectual Property Administration on September 5, 2023, and entitled "AUTOMOBILE REAR LONGITUDINAL BEAM ASSEMBLY AND VEHICLE", which is hereby incorporated by reference in its entirety.

### TECHNICAL FIELD

The present application relates to the technical field of vehicle equipment, and in particular to a rear longitudinal beam assembly and a vehicle.

### BACKGROUND

The rear longitudinal beam of a vehicle is an important protective structure in the vehicle body structure and is used to resist a rear impact of the vehicle. The rear longitudinal beam extends along the length direction of the vehicle body. One end of the rear longitudinal beam facing the front of the vehicle body is connected to a sill beam of the vehicle body, and the other end of the rear longitudinal beam facing the rear of the vehicle body is connected to a rear panel of the vehicle body. When the rear of the vehicle is impacted, the impact force generated by the impact is transmitted to the rear longitudinal beam through the rear panel. The rear longitudinal beam absorbs the impact force through deformation and further transmits the impact force that is not fully absorbed to other structures of the vehicle body so that the remaining impact force can be further absorbed by the other structures of the vehicle body.

However, the rear longitudinal beams in the aforementioned related technologies have poor impact resistance, which reduces the strength of the vehicle and riding safety of a user.

### SUMMARY

Embodiments of the present application provide a rear longitudinal beam assembly and a vehicle, aimed at solving the technical problems in the above related art that the rear longitudinal beam has poor impact resistance, which reduces the strength of the vehicle and the riding safety of a user.

To achieve the above objectives, the embodiments of the present application provide the following technical solutions.

A first aspect of an embodiment of the present application provides a rear longitudinal beam assembly, which includes a first longitudinal beam section, a second longitudinal beam section, and a first induction structure;
one end of the first longitudinal beam section is configured to connect to a sill beam of a vehicle body, the other end of the first longitudinal beam section is connected to the second longitudinal beam section, an end of the second longitudinal beam section facing away from the first longitudinal beam section is configured to connect to a rear panel of the vehicle body;
the first longitudinal beam section is disposed obliquely relative to the sill beam, the second longitudinal beam section is parallel to the sill beam, and the second longitudinal beam section is closer to a top of the vehicle body relative to the sill beam;
a side of the second longitudinal beam section facing the top of the vehicle body is a first side wall, one end of the first induction structure is connected to the first side wall, and the other end of the first induction structure is connected to the rear panel, and the first induction structure is configured to suppress the second longitudinal beam section from lifting towards the top of the vehicle body.

Based on the above technical solution, the present application may further be improved as follows.

In a possible implementation, the first induction structure includes a first connection plate and a second connection plate that are connected to each other;
the first connection plate is detachably connected to the first side wall of the second longitudinal beam section, and the second connection plate is detachably connected to the rear panel.

In a possible implementation, the rear longitudinal beam assembly further includes a second induction structure;
the second longitudinal beam section further includes a second side wall opposite to the first side wall, and a third side wall, where the first side wall and the second side wall are connected by the third side wall;
the second induction structure includes a first connection structure and a second connection structure, with a first interval between the first connection structure and the second connection structure, one end of the first connection structure is connected to the second side wall, the other end of the first connection structure is connected to the rear panel, one end of the second connection structure is connected to the third side wall, and the other end of the second connection structure is connected to the rear panel.

In a possible implementation, the first connection structure includes a third connection plate and a fourth connection plate, the third connection plate is detachably connected to the second side wall, and the fourth connection plate is detachably connected to the rear panel;
the second connection structure includes a fifth connection plate and a sixth connection plate, the fifth connection plate is detachably connected to the third side wall, and the sixth connection plate is detachably connected to the rear panel.

In a possible implementation, the second induction structure further includes a first connection section, the first connection section is disposed in the first interval, and the third connection plate and the fifth connection plate are connected by the first connection section;
the first connection section, the third connection plate, and the fifth connection plate collectively form a first notch, and the first notch faces the rear panel.

In a possible implementation, the second longitudinal beam section further includes a fourth side wall disposed opposite to the third side wall;
the second induction structure further includes a third connection structure, one end of the third connection structure is connected to the fourth side wall, and the other end of the third connection structure is connected to the rear panel, so that the fourth side wall is connected to the rear panel by the third connection structure;
there is a second interval between the third connection structure and the first connection structure.

In a possible implementation, the third connection structure includes a seventh connection plate and an eighth connection plate, the seventh connection plate is detachably connected to the fourth side wall, and the eighth connection plate is detachably connected to the rear panel.

In a possible implementation, the second induction structure further includes a second connection section, the second connection section is disposed in the second interval, and the third connection plate and the seventh connection plate are connected by the second connection section;
the second connection section, the third connection plate, and the seventh connection plate collectively form a second notch, and the second notch faces the rear panel.

In a possible implementation, a first recess is disposed on the second side wall of the second longitudinal beam section, the first recess extends in a width direction of the second side wall, and the first recess is disposed to face the rear panel.

In a possible implementation, a second recess is disposed on the third side wall of the second longitudinal beam section, the second recess extends in a width direction of the third side wall, and the second recess is disposed to face the rear panel;
and/or, a third recess is disposed on the fourth side wall of the second longitudinal beam section, the third recess extends in a width direction of the fourth side wall, and the third recess is disposed to face the rear panel.

In a possible implementation, the first longitudinal beam section includes a first sub-beam and a second sub-beam arranged in a length direction of the vehicle body;
the first sub-beam has a first groove, a plurality of spaced-apart partition ribs, and a plurality of reinforcement structures, the plurality of partition ribs are disposed within the first groove to divide the first groove into a plurality of energy absorption cavities arranged along a height direction of the vehicle body, and each reinforcement structure is disposed within one energy absorption cavity;
the second sub-beam is connected to the energy absorption cavity facing the top of the vehicle body, and the second sub-beam faces the rear of the vehicle body.

In a possible implementation, the plurality of partition ribs include a first partition rib and a second partition rib arranged in the height direction of the vehicle body, the first partition rib faces the top of the vehicle body, and the first partition rib and the second partition rib are configured to divide the first groove into a first energy absorption cavity, a second energy absorption cavity, and a third energy absorption cavity;
the plurality of reinforcement structures include a first reinforcement structure, a second reinforcement structure, and a third reinforcement structure, the first reinforcement structure is disposed in the first energy absorption cavity, the second reinforcement structure is disposed in the second energy absorption cavity, and the third reinforcement structure is disposed in the third energy absorption cavity, the first energy absorption cavity faces the top of the vehicle body, the third energy absorption cavity faces a bottom of the vehicle body, the second energy absorption cavity is located between the first energy absorption cavity and the third energy absorption cavity, and the first energy absorption cavity is connected to the second sub-beam.

In a possible implementation, the first reinforcement structure includes a first rib plate and a second rib plate;
the first energy absorption cavity has a first wall surface opposite to the first partition rib, and the first wall surface faces away from the second energy absorption cavity;
one end of the first rib plate and one end of the second rib plate are both connected to the first wall surface, the other end of the first rib plate and the other end of the second rib plate are both connected to the first partition rib, and the first rib plate and the second rib plate are disposed to cross each other.

In a possible implementation, the first reinforcement structure further includes a third rib plate, and the third rib plate is located on a side of the first rib plate facing away from the second sub-beam;
one end of the third rib plate is connected to the first partition rib, and the other end of the third rib plate extends away from the second sub-beam and is connected to the first wall surface.

In a possible implementation, the second reinforcement structure includes a fourth rib plate;
the second energy absorption cavity includes a first partition rib and a second partition rib disposed opposite to each other;
one end of the fourth rib plate is connected to an end of the second partition rib facing the second sub-beam, and the other end of the fourth rib plate is connected to an end of the first partition rib facing away from the second sub-beam.

In a possible implementation, the second reinforcement structure further includes a fifth rib plate;
the second energy absorption cavity further includes a second wall surface, one end of the second wall surface is connected to an end of the first partition rib facing away from the second sub-beam, and the other end of the second wall surface is connected to an end of the second partition rib facing away from the second sub-beam;
one end of the fifth rib plate is connected to the second partition rib, and the other end of the fifth rib plate is connected to the second wall surface.

In a possible implementation, the third reinforcement structure includes a sixth rib plate and a seventh rib plate;
the third energy absorption cavity includes a third wall surface disposed opposite to the second partition rib, one end of the sixth rib plate is connected to the second partition rib, and the other end of the sixth rib plate extends away from the second sub-beam and is connected to the third wall surface;
one end of the seventh rib plate is connected to an end of the sixth rib plate that is connected to the second partition rib, and the other end of the seventh rib plate extends toward the second sub-beam and is connected to the third wall surface.

In a possible implementation, the second sub-beam includes a fourth energy absorption cavity and a fourth reinforcement structure;
the fourth energy absorption cavity is connected to the energy absorption cavity facing the top of the vehicle body among the plurality of energy absorption cavities of the first sub-beam, the fourth reinforcement structure is disposed within the fourth energy absorption cavity, and side walls of the fourth energy absorption cavity are connected by the fourth reinforcement structure.

In a possible implementation, the fourth reinforcement structure includes a first support section and a second support section;
the fourth energy absorption cavity has a fourth wall surface and a fifth wall surface that are oppositely disposed in the height direction of the vehicle body, and the fourth wall surface faces the top of the vehicle body;
one end of the first support section is connected to the fourth wall surface, the other end of the first support section extends away from the rear of the vehicle body and is connected to one end of the second support section, and the other end of the second support section extends toward the rear of the vehicle body and is connected to the fifth wall surface.

In a possible implementation, the fourth reinforcement structure further includes a third support section, a fourth support section, and a third connection section;
one end of the third connection section is connected to a junction of the first support section and the second support section, the other end of the third connection section extends away from the rear of the vehicle body and is connected to one end of the third support section and one end of the fourth support section, the other end of the third support section extends away from the rear of the vehicle body and is connected to the fourth wall surface, and the other end of the fourth support section extends away from the rear of the vehicle body and is connected to the fifth wall surface.

A second aspect of the embodiments of the present application provides a vehicle, including a vehicle body, and the above-described rear longitudinal beam assembly disposed on the vehicle body.

The embodiments of the present application provide a rear longitudinal beam assembly and a vehicle. The rear longitudinal beam assembly includes a first longitudinal beam section, a second longitudinal beam section, and a first induction structure. One end of the first longitudinal beam section is configured to connect to a sill beam of the vehicle body, the other end of the first longitudinal beam section is connected to the second longitudinal beam section, and an end of the second longitudinal beam section facing away from the first longitudinal beam section is configured to connect to a rear panel of the vehicle body. The first longitudinal beam section is disposed obliquely relative to the sill beam, the second longitudinal beam section is parallel to the sill beam, and the second longitudinal beam section is closer to a top of the vehicle body relative to the sill beam. A side of the second longitudinal beam section facing the top of the vehicle body is a first side wall. One end of the first induction structure is connected to the first side wall, and the other end of the first induction structure is connected to the rear panel, so that a connection strength between the first side wall and the rear panel is greater than a connection strength between another side of the second longitudinal beam section opposite to the first side wall and the rear panel. Therefore, when the second longitudinal beam section is subjected to a rear impact, the first induction structure induces the second longitudinal beam section to shift towards a side with lower connection strength, i.e., induces the second longitudinal beam section to shift towards a bottom of the vehicle body, suppressing the rear longitudinal beam from lifting upward. Consequently, when the impact force is transmitted from the first longitudinal beam section to the sill beam, the component of the impact force in the extending direction of the sill beam is increased, thereby improving the effect of transmitting the impact force from the rear longitudinal beam assembly to the sill beam, and enhancing the impact resistance of the rear longitudinal beam assembly, thereby increasing the strength of the vehicle as well as the riding safety of a user.

Furthermore, the rear longitudinal beam assembly includes the first sub-beam and the second sub-beam arranged in the length direction of the vehicle body, with the second sub-beam facing the rear of the vehicle body. Therefore, when the vehicle is subjected to a rear impact, the second sub-beam deforms to absorb energy first, and then the first sub-beam deforms to absorb energy. The first sub-beam includes the first groove, a plurality of spaced-apart partition ribs, and a plurality of reinforcement structures, the plurality of partition ribs are disposed within the first groove to divide the first groove into a plurality of energy absorption cavities arranged along the height direction of the vehicle body, each reinforcement structure is disposed within one energy absorption cavity, and the second sub-beam is connected to the energy absorption cavity facing the top of the vehicle body. This enhances the overall strength of the first sub-beam, reduces the probability of deformation of the first sub-beam, thereby reducing the probability of deformation of the vehicle body, improving the impact resistance of the rear longitudinal beam assembly, and further enhancing the strength of the vehicle and the riding safety of a user.

### BRIEF DESCRIPTION OF DRAWINGS

In order to illustrate the technical solutions in the embodiments of the present application or in the prior art more clearly, the following will briefly introduce the drawings required for describing the embodiments or the prior art. Obviously, the drawings in the following description are some embodiments of the present application. For persons of ordinary skill in the art, other drawings can be obtained based on these drawings without creative effort.
FIG. 1 is a schematic structural diagram of a rear longitudinal beam assembly according to an embodiment of the present application.
FIG. 2 is a schematic structural diagram showing a second longitudinal beam section shifting downward when subjected to a rear impact according to an embodiment of the present application.
FIG. 3 is a schematic structural diagram of a second longitudinal beam section according to an embodiment of the present application.
FIG. 4 is a schematic structural diagram of the second longitudinal beam section from another perspective according to an embodiment of the present application.
FIG. 5 is a schematic structural diagram of a second type of rear longitudinal beam assembly according to an embodiment of the present application.
FIG. 6 is a schematic structural diagram of a second sub-beam of the rear longitudinal beam assembly in FIG. 5.

Description of reference numbers:
10-rear longitudinal beam assembly;
20-sill beam; 30-rear panel;
100-first longitudinal beam section;
100a-first sub-beam;
   110a-first groove; 120a-first partition rib; 130-second partition rib;
   140-first reinforcement structure; 150-second reinforcement structure; 160-third reinforcement structure;
   111a-first energy absorption cavity; 112a-second energy absorption cavity; 113-third energy absorption cavity;
   1111-first wall surface; 1121-second wall surface; 1131-third wall surface;
   141-first rib plate; 142-second rib plate; 143-third rib plate;
   151-fourth rib plate;
   152-fifth rib plate; 161-sixth rib plate; 162-seventh rib plate;
100b-second sub-beam;
   110b-fourth energy absorption cavity; 120b-fourth reinforcement structure;
   111b-fourth wall surface; 112b-fifth wall surface; 121-first support section;
   122-second support section; 123-third support section; 124-fourth support section;
   125-third connection section;
200-second longitudinal beam section;
   210-first side wall; 220-second side wall; 230-third side wall;
   240-fourth side wall;
   250-first flange structure; 260-second flange structure;
   221-first recess; 231-second recess; 241-third recess;
300-first induction structure;
   310-first connection plate; 320-second connection plate;
400-second induction structure;
   410-first connection structure; 420-second connection structure;
   430-third connection structure;
   440-first interval; 450-second interval;
   411-third connection plate; 412-fourth connection plate; 413-first connection section;
   414-second connection section;
   421-fifth connection plate; 422-sixth connection plate;
   431-seventh connection plate; 432-eighth connection plate.

### DESCRIPTION OF EMBODIMENTS

As mentioned in the background section, the rear longitudinal beam in the prior art is prone to lifting upward when subjected to a rear impact, which reduces the effect of transmitting the impact force from the rear longitudinal beam to the sill beam. The reason for this problem is that the rear longitudinal beam includes an inclined section and a horizontal section. The inclined section is connected towards the front of the vehicle body, with one end connected to the sill beam and the other end, facing the rear of the vehicle body, connected to the horizontal section. The horizontal section faces the rear of the vehicle body, and the horizontal section faces the top of the vehicle body relative to the sill beam, and there is a height difference between the horizontal section and the sill beam.

When the rear of the vehicle body is impacted, the impact force is first transmitted to the horizontal section, and then from the horizontal section to the inclined section. Since the inclined section is disposed obliquely relative to the sill beam, the impact force on the inclined section has two components when the impact force on the inclined section is transmitted to the sill beam, where one impact force component is transmitted towards the bottom of the vehicle body along the height direction of the vehicle body, and the other impact force component is transmitted along the extending direction of the sill beam. The larger the component of the impact force in the extending direction of the sill beam, the more conducive it is to transmitting the impact force from the rear longitudinal beam to the sill beam.

In the prior art, an end of the horizontal section facing the rear of the vehicle body is connected to the rear panel of the vehicle body, and there is a possibility that the horizontal section will lift towards the top of the vehicle body. When the horizontal section lifts towards the top of the vehicle body under the action of a rear impact force, it causes a trend of further inclination of the inclined section relative to the sill beam, thereby reducing the component of the impact force in the length extension direction of the sill beam, and consequently reducing the effect of transmitting the impact force from the rear longitudinal beam to the sill beam.

Furthermore, the rear longitudinal beam in the prior art has low strength, is prone to overall deformation, and can cause deformation of the vehicle, affecting the overall strength of the vehicle and riding safety of a user. The reason for this problem is that the rear longitudinal beam in the related art is formed by welding two sheet metal parts extending along the length direction of the vehicle body. The interior of the rear longitudinal beam is hollow along the length direction of the vehicle body, lacking internal reinforcement structures, and there is no sectioned reinforcement design for the rear longitudinal beam. Therefore, when the vehicle body is subjected to a rear impact, energy is absorbed by the two welded sheet metal parts, causing the rear longitudinal beam to deform easily upon the rear impact, thus causing the vehicle body to deform and affecting the riding safety of a user.

To address the above technical problem, the embodiments of the present application provide a rear longitudinal beam assembly and a vehicle. The rear longitudinal beam assembly includes a first longitudinal beam section, a second longitudinal beam section, and a first induction structure. One end of the first longitudinal beam section is configured to connect to a sill beam of the vehicle body, the other end of the first longitudinal beam section is connected to the second longitudinal beam section, and an end of the second longitudinal beam section facing away from the first longitudinal beam section is configured to connect to a rear panel of the vehicle body. The first longitudinal beam section is disposed obliquely relative to the sill beam, the second longitudinal beam section is parallel to the sill beam, and the second longitudinal beam section is closer to a top of the vehicle body relative to the sill beam; A side of the second longitudinal beam section facing the top of the vehicle body is a first side wall. One end of the first induction structure is connected to the first side wall, and the other end of the first induction structure is connected to the rear panel, so that a connection strength between the first side wall and the rear panel is greater than a connection strength between another side of the second longitudinal beam section opposite to the first side wall and the rear panel. Therefore, when the second longitudinal beam section is subjected to a rear impact, the first induction structure induces the second longitudinal beam section to shift towards a side with lower connection strength, i.e., induces the second longitudinal beam section to shift towards a bottom of the vehicle body, suppressing the rear longitudinal beam from lifting upward. Consequently, when the impact force is transmitted from the first longitudinal beam section to the sill beam, the component of the impact force in the length extending direction of the sill beam is increased, thereby improving the effect of transmitting the impact force from the rear longitudinal beam assembly to the sill beam, enhancing the impact resistance of the rear longitudinal beam assembly, and increasing the strength of the vehicle as well as the riding safety of a user.

Furthermore, the rear longitudinal beam assembly includes the first sub-beam and the second sub-beam that are arranged in the length direction of the vehicle body, with the second sub-beam facing the rear of the vehicle body. Therefore, when the vehicle is subjected to a rear impact, the second sub-beam deforms to absorb energy first, and then the first sub-beam deforms to absorb energy. The first sub-beam includes a first groove, a plurality of spaced-apart partition ribs, and a plurality of reinforcement structures, where the plurality of partition ribs are disposed within the first groove to divide the first groove into a plurality of energy absorption cavities arranged along the height direction of the vehicle body, and each reinforcement structure is disposed within one energy absorption cavity, and the second sub-beam is connected to the energy absorption cavity facing the top of the vehicle body. This enhances the overall strength of the first sub-beam, reduces the possibility of deformation of the first sub-beam, thereby reducing the possibility of deformation of the vehicle body, improving the strength of the vehicle body and the riding safety of a user.

In order to make the aforementioned objectives, features, and advantages of the embodiments of the present application more clearly understood, the technical solutions in the embodiments of the present application will be described clearly and completely below in conjunction with the drawings in the embodiments of the present application. Obviously, the described embodiments are only part of the embodiments of the present application, not all of them. Based on the embodiments in the present application, all other embodiments obtained by persons of ordinary skill in the art without making creative efforts shall fall within the protection scope of the present application.

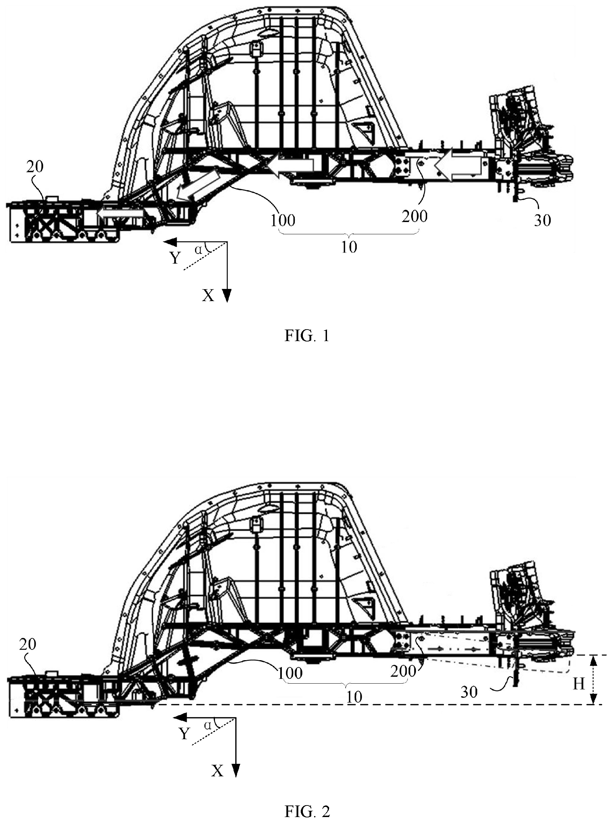

With reference to FIG. 1 to FIG. 3, an embodiment of the present application provides a rear longitudinal beam assembly 10. The rear longitudinal beam assembly 10 includes a first longitudinal beam section 100, a second longitudinal beam section 200, and a first induction structure 300. The first longitudinal beam section 100 and a rear floor of the vehicle may be an integrally formed structure; for example, the first longitudinal beam section 100 and the rear floor may be an aluminum alloy integrally die-cast structure, thereby enhancing the overall strength of the first longitudinal beam section 100 and the rear floor, and improving the impact resistance of the first longitudinal beam section 100.

In some embodiments, the first longitudinal beam section 100 and the second longitudinal beam section 200 may be connected in a detachable manner; for example, the first longitudinal beam section 100 and the second longitudinal beam section 200 can be connected by a riveting member. In some embodiments, an end of the first longitudinal beam section 100 facing the rear of the vehicle body is provided with a mounting groove. An end of the second longitudinal beam section 200 facing away from the rear of the vehicle body is inserted into the mounting groove, and the wall surface of the second longitudinal beam section 200 and the wall surface of the mounting groove are detachably connected by a riveting member. Therefore, the groove wall of the mounting groove can limit the position of the second longitudinal beam section 200, reducing the possibility of the second longitudinal beam section 200 shifting relative to the first longitudinal beam section 100 when subjected to a rear impact.

Referring to FIG. 1, in specific implementation, an end of the first longitudinal beam section 100 facing the front of the vehicle body is configured to connect to the sill beam 20 of the vehicle body. The other end of the first longitudinal beam section 100 facing the rear of the vehicle body is connected to the second longitudinal beam section 200. An end of the second longitudinal beam section 200 facing away from the first longitudinal beam section 100 is configured to connect to the rear panel 30 at the rear of the vehicle body.

Referring to FIGS. 1 and 2, the first longitudinal beam section 100 may be disposed at a rear wheel housing of the vehicle body. The first longitudinal beam section 100 may be disposed along an outer edge of the rear wheel housing facing the bottom of the vehicle body. The first longitudinal beam section 100 is disposed obliquely relative to the sill beam 20, so that an angle is formed between the extending direction of the first longitudinal beam section 100 and the sill beam 20 (as indicated by angle α in FIG. 2). An end of the first longitudinal beam section 100 facing away from the sill beam 20 extends obliquely upward towards the rear of the vehicle body and is connected to the second longitudinal beam section 200. The second longitudinal beam section 200 is parallel to the sill beam 20, and the second longitudinal beam section 200 is closer to the top of the vehicle body relative to the sill beam 20. A height difference exists between the second longitudinal beam section 200 and the sill beam 20 (as indicated by H in FIG. 2).

Referring to FIG. 2, it should be noted that when the impact force acting on the first longitudinal beam section 100 is transmitted to the sill beam 20, there are at least two impact force components, where one impact force component (indicated by X in FIG. 2) is transmitted towards the bottom of the vehicle body along the height direction of the vehicle body, and this impact force component X cannot be transmitted to the sill beam 20; the other impact force component (indicated by Y in FIG. 2) is transmitted along the length extension direction of the sill beam 20. The larger the impact force component Y, the greater the impact force transmitted to the sill beam 20, which is more conducive to transmitting the impact force from the first longitudinal beam section 100 to the sill beam 20, thereby improving the effect of impact force transmission by the rear longitudinal beam assembly 10. It is understandable that there is a direct proportional relationship between the angle α and the impact force component; for example, the smaller the angle α, the larger the impact force component Y, resulting in a greater impact force transmitted towards the sill beam 20, which is more favorable for the transmission of impact force from the rear longitudinal beam assembly 10.

In some embodiments, if the second longitudinal beam section 200 lifts towards the top of the vehicle body when subjected to a rear impact, the second longitudinal beam section 200 will apply a downward pressure towards the bottom of the vehicle body to the first longitudinal beam section 100, causing a tendency for the angle α between the first longitudinal beam section 100 and the sill beam 20 to increase, thereby increasing the impact force component X and decreasing the impact force component Y, reducing the impact force transmitted from the first longitudinal beam section 100 to the sill beam 20, and thus reducing the transmission effect of impact force of the rear longitudinal beam assembly 10.

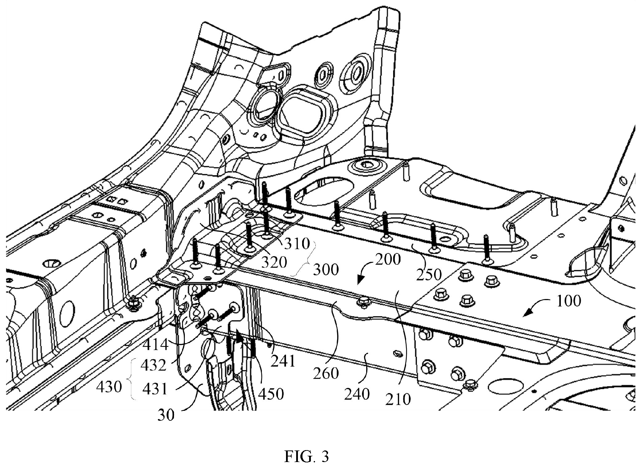

Referring to FIG. 3, a side of the second longitudinal beam section 200 facing the top of the vehicle body is a first side wall 210. One end of the first induction structure 300 is connected to the first side wall 210, and the other end of the first induction structure 300 is connected to the rear panel 30. The first induction structure 300 is configured to suppress the second longitudinal beam section 200 from lifting towards the top of the vehicle body, ensuring that the connection strength between the first side wall 210 and the rear panel 30 is greater than the connection strength between a side opposite to the first side wall 210 and the rear panel 30. Therefore, when the second longitudinal beam section 200 is subjected to a rear impact, the first induction structure 300 induces the second longitudinal beam section 200 to shift towards a side with lower connection strength, i.e., induces the second longitudinal beam section 200 to shift downward towards the bottom of the vehicle body, suppressing the rear longitudinal beam from lifting upward. Consequently, when the impact force is transmitted from the first longitudinal beam section 100 to the sill beam 20, the component of the impact force in the extending direction of the sill beam 20 is increased, thereby improving the effect of transmitting the impact force from the rear longitudinal beam assembly 10 to the sill beam 20, enhancing the impact resistance of the rear longitudinal beam assembly 10, and increasing the strength of the vehicle as well as the riding safety of a user.

Referring to FIG. 3, in a possible implementation, the first induction structure 300 may include a first connection plate 310 and a second connection plate 320 connected to each other. The first connection plate 310 is detachably connected to the first side wall 210 of the second longitudinal beam section 200, and the second connection plate 320 is detachably connected to the rear panel 30. This enables the connection between the first surface of the second longitudinal beam section 200 facing the top of the vehicle body and the rear panel 30, enhancing the connection strength between the side of the second longitudinal beam section 200 facing the top of the vehicle body and the rear panel 30.

The first connection plate 310 and the second connection plate 320 can be stamped sheet metal parts. The first connection plate 310 can be detachably connected to the first side wall 210 of the second longitudinal beam section 200 by a riveting member, and the first connection plate 310 is connected to a portion of the first side wall 210 near the rear panel 30. The second connection plate 320 can be detachably connected to the rear panel 30 by a riveting member, or the second connection plate 320 and the rear panel 30 can also be connected by welding. The connection method between the first connection plate 310 and the first side wall 210 is the same as that between the second connection plate 320 and the rear panel 30. The second connection plate 320 and the rear panel 30 can also be detachably connected by a bolt and a nut.

Continuing to refer to FIG. 3, in some embodiments, a first flange structure 250 and a second flange structure 260 are disposed on the first side wall 210 of the second longitudinal beam section 200. The first flange structure 250 is disposed at a first edge of the first side wall 210 extending in the length direction of the vehicle body, where the first edge is a junction of the first side wall 210 and the third side wall 230. Furthermore, the first flange structure 250 extends away from the first edge in the width direction of the vehicle body. The first flange structure 250 is configured for detachable connection to the vehicle body, which can enhance the connection strength between the first side wall 210 and the vehicle body, thereby increasing the connection strength between the side of the second longitudinal beam section 200 facing the top of the vehicle body and the vehicle body.

The first side wall 210 further has a second edge disposed opposite to the first edge. A second flange structure 260 is disposed opposite to and spaced-apart from the first flange structure 250. The second flange structure 260 is disposed at the second edge, which is a junction of the first side wall 210 and the fourth side wall 240. The second flange structure 260 extends away from the first edge in the width direction of the vehicle body. The second flange structure 260 is configured for detachable connection to the vehicle body. The second flange structure 260 can further enhance the connection strength between the side of the second longitudinal beam section 200 facing the top of the vehicle body and the vehicle body, so that the connection strength between the side of the second longitudinal beam section 200 facing the top of the vehicle body and the vehicle body is further greater than the connection strength between the side of the second longitudinal beam section 200 facing the bottom of the vehicle body and the vehicle body.

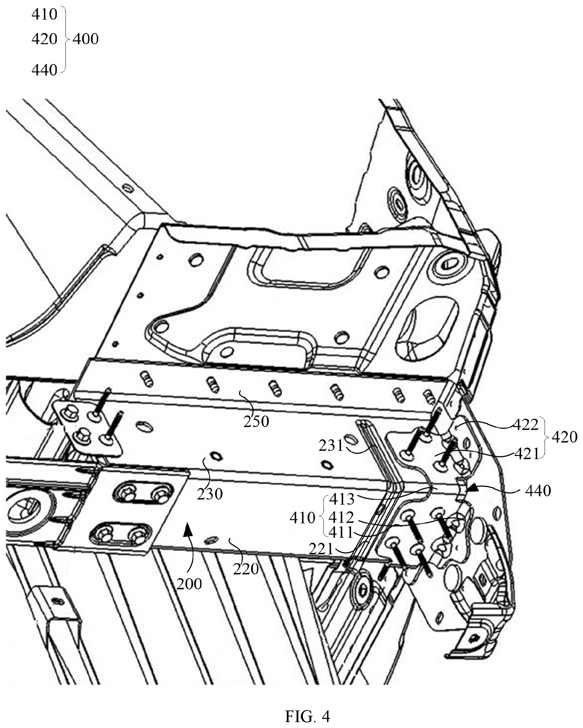

Referring to FIG. 4, the rear longitudinal beam assembly 10 may further include a second induction structure 400. The second induction structure 400 may include a first connection structure 410 and a second connection structure 420. The second longitudinal beam section 200 may further include a second side wall 220 opposite to the first side wall 210, and a third side wall 230. The first side wall 210 and the second side wall 220 are connected by the third side wall 230. There is a first interval 440 between the first connection structure 410 and the second connection structure 420. One end of the first connection structure 410 is connected to the second side wall 220, and the other end of the first connection structure 410 is connected to the rear panel 30. By disposing the first connection structure 410, the connection strength between the second side wall 220 and the rear panel 30 can be improved, thereby enhancing the connection stability between the second longitudinal beam section 200 and the rear panel 30. One end of the second connection structure 420 is connected to the third side wall 230, and the other end of the second connection structure 420 is connected to the rear panel 30, which can reduce the shift of the second longitudinal beam section 200 in the width direction of the vehicle body and facilitate the transmission of the impact force from the rear of the vehicle body to the second longitudinal beam section 200.

In a specific implementation, there is a first interval 440 between the first connection structure 410 and the second connection structure 420. The first interval 440 is located at the junction of the second side wall 220 and the third side wall 230. The portion of the second longitudinal beam section 200 corresponding to the first interval 440 is not connected to the rear panel 30, thereby reducing the connection strength between the portion of the second longitudinal beam section 200 corresponding to the first interval 440 and the rear panel 30. When the second longitudinal beam section 200 is subjected to an impact from the rear of the vehicle body, because the connection strength between the first interval 440 and the rear panel 30 is relatively weak, the first interval 440 preferentially deforms to absorb energy, thereby inducing the second longitudinal beam section 200 to shift downward towards the bottom of the vehicle body and reducing the possibility of the second longitudinal beam section 200 lifting upward.

Referring to FIG. 4, in some embodiments, the first connection structure 410 may include a third connection plate 411 and a fourth connection plate 412. The third connection plate 411 is detachably connected to the second side wall 220, and the fourth connection plate 412 is detachably connected to the rear panel 30. The third connection plate 411 may be detachably connected to the second side wall 220 by a riveting member, and the fourth connection plate 412 may also be detachably connected to the rear panel 30 by a riveting member. The second connection structure 420 may include a fifth connection plate 421 and a sixth connection plate 422. The fifth connection plate 421 is detachably connected to the third side wall 230, and the sixth connection plate 422 is detachably connected to the rear panel 30. The connection method between the fifth connection plate 421 and the third side wall 230 may refer to the connection method between the third connection plate 411 and the second side wall 220, and the connection method between the sixth connection plate 422 and the rear panel 30 may refer to the connection method between the fourth connection plate 412 and the rear panel 30.

Referring to FIG. 4, in a possible implementation, the first connection structure 410 and the second connection structure 420 may be an integrated structure. The second induction structure 400 may further include a first connection section 413. The first connection section 413 is disposed in the first interval 440, and the third connection plate 411 and the fifth connection plate 421 are connected by the first connection section 413, so that the first connection structure 410 and the second connection structure 420 are connected through the first connection section 413.

The first connection section 413, the third connection plate 411, and the fifth connection plate 421 collectively form a first notch, and the first notch faces the rear panel 30. The connection strength between the portion of the second longitudinal beam section 200 corresponding to the first notch and the rear panel 30 is lower than the connection strength between the portion of the second longitudinal beam section 200 corresponding to the first connection structure 410 and the rear panel 30, and is also lower than the connection strength between the portion of the second longitudinal beam section 200 corresponding to the second connection structure 420 and the rear panel 30. Therefore, when the second longitudinal beam section 200 is subjected to a rear impact, the portion of the second longitudinal beam section 200 corresponding to the first notch preferentially deforms and absorbs energy, thereby inducing the second longitudinal beam section 200 to shift downward and reducing the possibility of the second longitudinal beam section 200 lifting upward.

Referring to FIGS. 3 and 4, in a possible implementation, the second longitudinal beam section 200 may further include a fourth side wall 240 disposed opposite to the third side wall 230. The fourth side wall 240, together with the first side wall 210, the second side wall 220, and the third side wall 230, collectively form the outer side wall of the second longitudinal beam section 200.

The second induction structure 400 may further include a third connection structure 430. One end of the third connection structure 430 is connected to the fourth side wall 240, and the other end of the third connection structure 430 is connected to the rear panel 30, so that the fourth side wall 240 is connected to the rear panel 30 by the third connection structure 430. This can further reduce the possibility of the second longitudinal beam section 200 shifting in the width direction of the vehicle body. A second interval 450 is provided between the third connection structure 430 and the first connection structure 410. The second interval 450 is opposite to the first interval 440 and disposed symmetrically with respect to the second side wall 220. The second interval 450 has the same function as the first interval 440, and the second interval 450 also reduces the connection strength between the portion of the second longitudinal beam section 200 corresponding to the second interval 450 and the rear panel 30. When the second longitudinal beam section 200 is subjected to a rear impact, the connection strength between the area of the second longitudinal beam section 200 corresponding to the second interval 450 and the rear panel 30 is relatively weak. The second interval 450 preferentially deforms and absorbs energy, thereby inducing the second longitudinal beam section 200 to shift downward towards the bottom of the vehicle body and reducing the possibility of the second longitudinal beam section 200 lifting upward.

Referring to FIG. 3, in a possible implementation, the third connection structure 430 may include a seventh connection plate 431 and an eighth connection plate 432. The seventh connection plate 431 is detachably connected to the fourth side wall 240, and the eighth connection plate 432 is detachably connected to the rear panel 30. The connection method between the seventh connection plate 431 and the fourth side wall 240 may refer to the connection method between the third connection plate 411 and the second side wall 220. The connection method between the eighth connection plate 432 and the rear panel 30 may refer to the connection method between the fourth connection plate 412 and the rear panel 30.

Referring to FIG. 3, in a possible implementation, the third connection structure 430 and the first connection structure 410 may be an integrally formed structure. The second induction structure 400 may further include a second connection section 414. The second connection section 414 is disposed in the second interval 450, and the third connection plate 411 and the seventh connection plate 431 are connected by the second connection section 414, so that the third connection structure 430 and the first connection structure 410 are connected through the second connection section 414.

The second connection section 414, the third connection plate 411, and the seventh connection plate 431 collectively form a second notch, and the second notch faces the rear panel 30. The second notch has the same effect as the first notch. When the second longitudinal beam section 200 is subjected to a rear impact, the portion of the second longitudinal beam section 200 corresponding to the second notch preferentially deforms and absorbs energy, thereby inducing the second longitudinal beam section 200 to shift downward and reducing the possibility of the second longitudinal beam section 200 lifting upward.

Referring to FIG. 4, in a possible implementation, a first recess 221 is disposed on the second side wall 220 of the second longitudinal beam section 200. The first recess 221 may be dot-shaped, and the inner surface of the first recess 221 may be a hemispherical surface. Alternatively, the first recess 221 may be strip-shaped, the strip-shaped first recess 221 may extend in the width direction of the second side wall 220, and the first recess 221 is disposed toward the rear panel 30. By disposing the first recess 221 on the second side wall 220 facing the bottom of the vehicle body, because the strength at the first recess 221 is relatively low, when the second longitudinal beam section 200 is impacted, deformation is more easily to occur at the first recess 221. This enables the second side wall 220 to deform more readily compared to other side walls of the second longitudinal beam section 200, thereby inducing the second longitudinal beam section 200 to shift towards the bottom of the vehicle body and reducing the possibility of the second longitudinal beam section 200 lifting upward. In some embodiments, a plurality of first recesses 221 may be disposed on the second side wall 220, and the plurality of first recesses 221 are arranged at intervals along the length extension direction of the second longitudinal beam section 200.

Referring to FIG. 4, in a possible implementation, a second recess 231 is disposed on the third side wall 230 of the second longitudinal beam section 200. The second recess 231 extends in the width direction of the third side wall 230 and the second recess 231 is disposed toward the rear panel 30. A third recess 241 is disposed on the fourth side wall 240 of the second longitudinal beam section 200. The third recess 241 extends in the width direction of the fourth side wall 240 and the third recess 241 is disposed toward the rear panel 30. By disposing the second recess 231 and the third recess 241, the strength of the third side wall 230 and the fourth side wall 240 can be further reduced. When the second longitudinal beam section 200 is impacted, other side walls other than the first side wall 210 preferentially deform and absorb energy, thereby further inducing the second longitudinal beam section 200 to shift towards the bottom of the vehicle body and suppressing it from lifting upward.

It is understandable that both the second recess 231 and the third recess 241 can be provided in multiple numbers. For example, a plurality of second recesses 231 can be arranged at intervals along the length extension direction of the second longitudinal beam section 200. The second recess 231 and the third recess 241 may also have the same shape as the first recess 221.

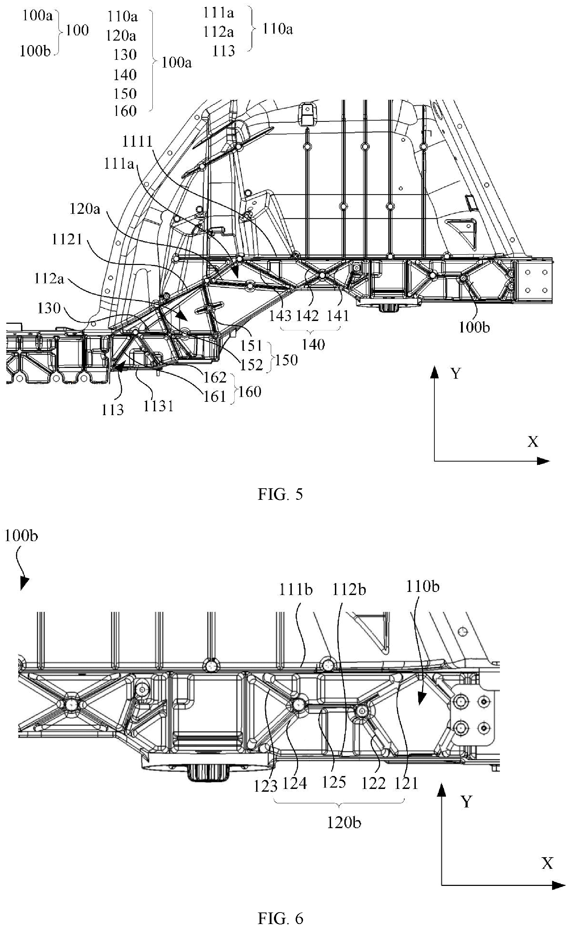

Referring to FIG. 5, in some embodiments, the first longitudinal beam section 100 may include a first sub-beam 100a and a second sub-beam 100b that are arranged in the length direction of the vehicle body (as indicated by the arrow X direction in FIG. 5). The second sub-beam 100b is closer to the rear of the vehicle body relative to the first sub-beam 100a. When the rear of the vehicle body is impacted, the second sub-beam 100b absorbs the impact energy first, and then the first sub-beam 100a absorbs the impact energy.

The first sub-beam 100a and the second sub-beam 100b can be integrally die-cast with the vehicle body. Compared to the welding formation method used in the prior art, this saves the welding step and significantly improves strength. In some embodiments, the first sub-beam 100a and the second sub-beam 100b are located in the rear wheel housing area of the vehicle body, and the first sub-beam 100a corresponds to the position of the rear seats inside the vehicle body. The increased strength of the first sub-beam 100a and the second sub-beam 100b can reduce the possibility of deformation in the rear wheel housing of the vehicle body and the rear floor area corresponding to the rear wheel housing, thereby improving the riding safety of rear-seat users.

Referring to FIG. 5, the first sub-beam 100a has a first groove 110a, a plurality of spaced-apart partition ribs, and a plurality of reinforcement structures. The plurality of partition ribs are disposed within the first groove 110a to divide the first groove 110a into a plurality of energy absorption cavities arranged along a height direction of the vehicle body (as indicated by the arrow Y in FIG. 5). For example, the first groove 110a can be divided into two energy absorption cavities, three energy absorption cavities, four energy absorption cavities, five energy absorption cavities, or even more energy absorption cavities. Each reinforcement structure is disposed within one energy absorption cavity. The second sub-beam 100b is connected to the energy absorption cavity facing the top of the vehicle body, and the second sub-beam 100b faces the rear of the vehicle body.

The plurality of partition ribs can be arranged at intervals in the height direction of the vehicle body. The partition ribs can extend and be arranged in the length direction of the vehicle body. The partition ribs can absorb impact energy from the rear of the vehicle body and can improve the impact resistance of the first groove 110a in the length direction of the vehicle body, reducing the possibility of deformation of the first sub-beam 100a. Furth, by disposing a reinforcement structure within each energy absorption cavity, the impact resistance of each energy absorption cavity can be further strengthened, enhancing the overall strength of the first sub-beam 100a and enabling sectioned energy absorption of the first sub-beam 100a.

In some embodiments, the plurality of partition ribs, the plurality of reinforcement structures, and the first groove 110a can all be an integrally die-cast structure. The first sub-beam 100a and the second sub-beam 100b can be an integrally die-cast aluminum alloy structure, thereby increasing the strength of the rear longitudinal beam assembly while reducing the weight of the rear longitudinal beam assembly, which in turn can reduce the weight of the vehicle body.

Referring to FIG. 5, in a possible implementation, the plurality of partition ribs may include a first partition rib 120a and a second partition rib 130 that are arranged in the height direction of the vehicle body. The first partition rib 120a faces the top of the vehicle body relative to the second partition rib 130. The first partition rib 120a and the second partition rib 130 are configured to divide the first groove 110a into a first energy absorption cavity 111a, a second energy absorption cavity 112a, and a third energy absorption cavity 113. The first energy absorption cavity 111a faces the top of the vehicle body, the third energy absorption cavity 113 faces the bottom of the vehicle body, and the second energy absorption cavity 112a is located between the first energy absorption cavity 111a and the third energy absorption cavity 113. The first energy absorption cavity 111a is connected to the second sub-beam 100b. The plurality of reinforcement structures may include a first reinforcement structure 140, a second reinforcement structure 150, and a third reinforcement structure 160. The first reinforcement structure 140 is disposed in the first energy absorption cavity 111a, the second reinforcement structure 150 is disposed in the second energy absorption cavity 112a, and the third reinforcement structure 160 is disposed in the third energy absorption cavity 113.

In some embodiments, projections of the first energy absorption cavity 111a, the second energy absorption cavity 112a, and the third energy absorption cavity 113 in the height direction of the vehicle body partially overlap. For example, the first energy absorption cavity 111a and the second energy absorption cavity 112a partially overlap, and an orthographic projection of a portion of the first energy absorption cavity 111a facing the rear of the vehicle body in the height direction of the vehicle body falls outside the second energy absorption cavity 112a. The second energy absorption cavity 112a and the third energy absorption cavity 113 partially overlap, and an orthographic projection of a portion of the third energy absorption cavity 113 facing the front of the vehicle body in the height direction of the vehicle body falls outside the second energy absorption cavity 112a. An end of the third energy absorption cavity 113 facing the front of the vehicle body is configured to be connected to the sill beam of the vehicle body.

Referring to FIG. 5, in some embodiments, the first reinforcement structure 140 may include a first rib plate 141 and a second rib plate 142. The first energy absorption cavity 111a has a first wall surface 1111 opposite to the first partition rib 120a. The first wall surface 1111 is disposed facing away from the second energy absorption cavity 112a. One end of the first rib plate 141 and one end of the second rib plate 142 are both connected to the first wall surface 1111, and the other end of the first rib plate 141 and the other end of the second rib plate 142 are both connected to the first partition rib 120a. The first rib plate 141 and the second rib plate 142 are disposed to cross each other. By using the cross-disposed first rib plate 141 and second rib plate 142, when the vehicle body is subjected to a rear impact, the first rib plate 141 and the second rib plate 142 can not only absorb the impact energy but also distribute the impact energy to the first wall surface 1111 and the first partition rib 120a for energy absorption, enabling the first energy absorption cavity 111a to fully absorb the impact energy.

In some embodiments, a plurality of crossing combined structures of the first rib plate 141 and the second rib plate 142 can be disposed within the first energy absorption cavity 111a to further improve the energy absorption effect and impact resistance.

Referring to FIG. 5, the first reinforcement structure 140 may further include a third rib plate 143. The third rib plate 143 is located on a side of the first rib plate 141 facing away from the second sub-beam 100b. One end of the third rib plate 143 is connected to the first partition rib 120a, and the other end of the third rib plate 143 extends away from the second sub-beam 100b and is connected to the first wall surface 1111, thereby further enhancing the strength and energy absorption effect of the first energy absorption cavity 111a.

In some embodiments, an end of the first rib plate 141 connected to the first partition rib 120a is away from the second sub-beam 100b compared to an end of the second rib plate 142 connected to the first partition rib 120a. One end of the third rib plate 143 is connected to the first partition rib 120a and also can be connected to the end of the first rib plate 141 connected to the first partition rib 120a. The other end of the third rib plate 143 can be connected to an end of the first wall surface 1111 away from the second sub-beam 100b.

Referring to FIG. 5, the second reinforcement structure 150 may include a fourth rib plate 151. The second energy absorption cavity 112a may have oppositely disposed first partition rib 120a and second partition rib 130. One end of the fourth rib plate 151 is connected to an end of the second partition rib 130 facing the second sub-beam 100b, and the other end of the fourth rib plate 151 is connected to an end of the first partition rib 120a facing away from the second sub-beam 100b. The fourth rib plate 151 forms an angle with the first partition rib 120a, so that the fourth rib plate 151 is disposed obliquely relative to the first partition rib 120a and the second partition rib 130. The second energy absorption cavity 112a may further have two oppositely disposed side walls, one of which is adjacent to the second sub-beam 100b. The first partition rib 120a, the second partition rib 130 and these two side walls collectively form the second energy absorption cavity 112a. An end of the fourth rib plate 151 connected to the second partition rib 130 can be connected at the junction between the second partition rib 130 and the side wall adjacent to the second sub-beam 100b, and an end of the fourth rib plate 151 connected to the first partition rib 120a can be connected at the junction between the first partition rib 120a and the side wall facing away from the second sub-beam 100b, so that the fourth rib plate 151 abuts against two opposite corners of the second energy absorption cavity 112a, thereby further enhancing the strength and energy absorption effect of the second energy absorption cavity 112a.

Referring to FIG. 5, the second reinforcement structure 150 may further include a fifth rib plate 152, and the second energy absorption cavity 112a may further include a second wall surface 1121. One end of the second wall surface 1121 is connected to an end of the first partition rib 120a facing away from the second sub-beam 100b, and the other end of the second wall surface 1121 is connected to an end of the second partition rib 130 facing away from the second sub-beam 100b, that is, the second wall surface 1121 is a side wall facing away from the second sub-beam 100b. One end of the fifth rib plate 152 is connected to the second partition rib 130, and the other end of the fifth rib plate 152 is connected to the second wall surface 1121. By disposing the fifth rib plate 152, the impact resistance strength of the second energy absorption cavity 112a can be further improved. It is understandable that the fifth rib plate 152 and the side wall of the second energy absorption cavity 112a may be an integrally die-cast structure.

Referring to FIG. 5, the third reinforcement structure 160 may include a sixth rib plate 161 and a seventh rib plate 162, and the side wall of the third energy absorption cavity 113 may include a third wall surface 1131 disposed opposite to the second partition rib 130. One end of the sixth rib plate 161 is connected to the second partition rib 130, and the other end of the sixth rib plate 161 extends away from the second sub-beam 100b and is connected to the third wall surface 1131. One end of the seventh rib plate 162 is connected to an end of the sixth rib plate 161 that is connected to the second partition rib 130, and the other end of the seventh rib plate 162 extends toward the second sub-beam 100b and is connected to the third wall surface 1131. By disposing the sixth rib plate 161 and the seventh rib plate 162, the strength of the third energy absorption cavity 113 can be increased, thereby enhancing the overall strength of the first sub-beam 100a. In some embodiments, the sixth rib plate 161 and the seventh rib plate 162, together with the side wall of the third energy absorption cavity 113, may also be an integrally die-cast structure. The third energy absorption cavity 113 faces the bottom of the vehicle body, and a side of the third energy absorption cavity 113 facing away from the second sub-beam 100b is configured to connect to the sill beam at the bottom of the vehicle body.

Referring to FIGS. 5 and 6, in a possible implementation, the second sub-beam 100b may include a fourth energy absorption cavity 110b and a fourth reinforcement structure 120b. A side wall of the fourth energy absorption cavity 110b is connected to an energy absorption cavity facing the top of the vehicle body among the plurality of energy absorption cavities of the first sub-beam 100a, for example, the fourth energy absorption cavity 110b can be connected to the first energy absorption cavity 111a of the first sub-beam 100a. The fourth reinforcement structure 120b is disposed within the fourth energy absorption cavity 110b, and the side walls of the fourth energy absorption cavity 110b are connected by the fourth reinforcement structure 120b. The fourth energy absorption cavity 110b extends in the length direction of the vehicle body (as indicated by the arrow X in FIG. 6), and the fourth reinforcement structure 120b and the side walls of the fourth energy absorption cavity 110b are an integrally die-cast structure. By disposing the fourth reinforcement structure 120b within the fourth energy absorption cavity 110b and connecting the fourth reinforcement structure 120b to the side walls of the fourth energy absorption cavity 110b.

Referring to FIG. 6, in a possible implementation, the fourth reinforcement structure 120b may include a first support section 121 and a second support section 122, and the fourth energy absorption cavity 110b has a fourth wall surface 111b and a fifth wall surface 112b that are oppositely disposed in the height direction of the vehicle body (as indicated by the arrow Y in FIG. 6). The fourth wall surface 111b is closer to the top of the vehicle body relative to the fifth wall surface 112b.

One end of the first support section 121 is connected to the fourth wall surface 111b, and the other end of the first support section 121 extends away from the rear of the vehicle body and is connected to one end of the second support section 122, so that an angle is formed between the first support section 121 and the fourth wall surface 111b. The other end of the second support section 122 extends toward the rear of the vehicle body and is connected to the fifth wall surface 112b, so that an angle is formed between the second support section 122 and the fifth wall surface 112b. When the rear of the vehicle body is impacted, the first support section 121 and the second support section 122 can distribute the impact energy to the fourth wall surface 111b and the fifth wall surface 112b, enabling the fourth wall surface 111b and the fifth wall surface 112b of the fourth energy absorption cavity 110b to fully deform and absorb energy. As a result, the energy absorption effect of the second sub-beam 100b is improved, the impact energy transmitted to the first sub-beam 100a is reduced, and the possibility of deformation of the first sub-beam 100a is lowered.

Referring to FIG. 6, in some embodiments, the fourth reinforcement structure 120b may further include a third support section 123, a fourth support section 124, and a third connection section 125. One end of the third connection section 125 is connected to the junction of the first support section 121 and the second support section 122. The other end of the third connection section 125 extends away from the rear of the vehicle body and is connected to one end of the third support section 123 and one end of the fourth support section 124. The other end of the third support section 123 extends away from the rear of the vehicle body and is connected to the fourth wall surface 111b. The other end of the fourth support section 124 extends away from the rear of the vehicle body and is connected to the fifth wall surface 112b. By disposing the third connection section 125, the third support section 123, and the fourth support section 124, the impact resistance of the first support section 121 and the second support section 122 against the impact energy from the rear of the vehicle body can be improved, thereby enhancing the strength of the second sub-beam 100b and its deformation resistance.

In specific implementation, the fourth energy absorption cavity 110b may further include two oppositely disposed side walls. The fourth wall surface 111b, the fifth wall surface 112b, and the two oppositely disposed side walls collectively form the fourth energy absorption cavity 110b. One of the two side walls can be connected to the first energy absorption cavity 111a, and the other side wall faces the rear of the vehicle body. An end of the third support section 123 facing away from the third connection section 125 can be connected at the junction of the fourth wall surface 111b and the side wall facing the first energy absorption cavity 111a. An end of the fourth support section 124 facing away from the third connection section 125 can be connected at the junction of the fifth wall surface 112b and the side wall facing the first energy absorption cavity 111a, so that the third support section 123, the fourth support section 124, and the side wall facing the first energy absorption cavity 111a form a "triangle" stable structure, thereby further improving the strength of the second sub-beam 100b.

An embodiment of the present application further provides a vehicle, the vehicle may include a vehicle body and a rear longitudinal beam assembly 10 disposed on the vehicle body. The vehicle may have two rear longitudinal beam assemblies 10, which are spaced apart in the width direction of the vehicle body. Second longitudinal beam sections 200 of the two rear longitudinal beam assemblies 10 are connected by the rear panel 30. By using the aforementioned rear longitudinal beam assembly 10, the effect of transmitting the rear impact force by the vehicle body can be improved, enabling the vehicle body to fully absorb the impact force, thereby enhancing the operational safety of the vehicle.

In the present specification, the various embodiments or implementation methods are described in a progressive manner, with each embodiment focusing on differences from the other embodiments, and the same or similar parts between the various embodiments can be referenced to each other.

It should be noted that phrases such as "in specific implementation", "in some embodiments", "in this embodiment" and "exemplarily" used in the specification indicate that the described embodiment(s) may include specific features, structures, or characteristics, but not every embodiment includes these specific features, structures, or characteristics. Moreover, such phrases do not necessarily refer to the same embodiment. Furthermore, when specific features, structures, or characteristics are described in connection with an embodiment, it is within the knowledge of a person skilled in the art to implement such features, structures, or characteristics in combination with other embodiments, whether explicitly or not explicitly described.

In general, terms should be understood, at least in part, based on the context in which they are used. For example, depending at least in part on context, the term "one or more" as used herein may be configured to describe any feature, structure, or characteristic in a singular sense or may be configured to describe a combination of features, structures, or characteristics in a plural sense. Similarly, depending at least in part on context, terms such as "a" or "the" may be understood to convey a singular usage or a plural usage.

It should be readily understood that the terms "on", "above", and "over" in the present disclosure should be interpreted in the broadest manner, so that "on" not only means "directly on something" but also includes the meaning of "on something" with an intermediate feature or layer therebetween. Similarly, "above" or "over" not only includes the meaning of "above" or "over" something but may also include the meaning of "above" or "over" something without any intermediate feature or layer therebetween (i.e., directly on something).

Furthermore, for ease of description, spatially relative terms such as "below", "under", "beneath", "above", "over", and the like may be used herein to describe the relationship of one element or feature relative to another element or feature as illustrated in the figures. These spatially relative terms are intended to encompass different orientations of the device in use or operation, in addition to the orientation depicted in the figures. The apparatus may have other orientations (rotated 90 degrees or in other orientations), and the spatially relative descriptors used herein should be interpreted accordingly.

Finally, it should be noted that the above embodiments are merely used to illustrate the technical solutions of the present application and are not intended to limit them. Although the present application has been described in detail with reference to the foregoing embodiments, persons of ordinary skill in the art should understand that they may still modify the technical solutions described in the foregoing embodiments or make equivalent substitutions to some or all of the technical features therein. These modifications or substitutions do not make the essence of corresponding technical solutions depart from the scope of the technical solutions of the embodiments of the present application.

## Claims

1. A rear longitudinal beam assembly, comprising a first longitudinal beam section, a second longitudinal beam section and a first induction structure, wherein
one end of the first longitudinal beam section is configured to connect to a sill beam of a vehicle body, the other end of the first longitudinal beam section is connected to the second longitudinal beam section, an end of the second longitudinal beam section facing away from the first longitudinal beam section is configured to connect to a rear panel of the vehicle body;
the first longitudinal beam section is disposed obliquely relative to the sill beam, the second longitudinal beam section is parallel to the sill beam, and the second longitudinal beam section is closer to a top of the vehicle body relative to the sill beam;
a side of the second longitudinal beam section facing the top of the vehicle body is a first side wall, one end of the first induction structure is connected to the first side wall, the other end of the first induction structure is connected to the rear panel, and the first induction structure is configured to suppress the second longitudinal beam section from lifting towards the top of the vehicle body.

2. The rear longitudinal beam assembly according to claim 1, wherein the first induction structure comprises a first connection plate and a second connection plate connected to each other;
wherein the first connection plate is detachably connected to the first side wall of the second longitudinal beam section, and the second connection plate is detachably connected to the rear panel.

3. The rear longitudinal beam assembly according to claim 2, wherein the rear longitudinal beam assembly further comprises a second induction structure;
the second longitudinal beam section further comprises a second side wall opposite to the first side wall, and a third side wall, the first side wall and the second side wall are connected by the third side wall;
the second induction structure comprises a first connection structure and a second connection structure, with a first interval between the first connection structure and the second connection structure, one end of the first connection structure is connected to the second side wall, the other end of the first connection structure is connected to the rear panel, one end of the second connection structure is connected to the third side wall, and the other end of the second connection structure is connected to the rear panel.

4. The rear longitudinal beam assembly according to claim 3, wherein the first connection structure comprises a third connection plate and a fourth connection plate, the third connection plate is detachably connected to the second side wall, and the fourth connection plate is detachably connected to the rear panel;
the second connection structure comprises a fifth connection plate and a sixth connection plate, the fifth connection plate is detachably connected to the third side wall, and the sixth connection plate is detachably connected to the rear panel.

5. The rear longitudinal beam assembly according to claim 4, wherein the second induction structure further comprises a first connection section, the first connection section is disposed in the first interval, and the third connection plate and the fifth connection plate are connected by the first connection section;
the first connection section, the third connection plate and the fifth connection plate collectively form a first notch, and the first notch faces the rear panel.

6. The rear longitudinal beam assembly according to any one of claims 4 to 5, wherein the second longitudinal beam section further comprises a fourth side wall disposed opposite to the third side wall;
the second induction structure further comprises a third connection structure, one end of the third connection structure is connected to the fourth side wall, and the other end of the third connection structure is connected to the rear panel, so that the fourth side wall is connected to the rear panel by the third connection structure;
a second interval is provided between the third connection structure and the first connection structure.

7. The rear longitudinal beam assembly according to claim 6, wherein the third connection structure comprises a seventh connection plate and an eighth connection plate, the seventh connection plate is detachably connected to the fourth side wall, and the eighth connection plate is detachably connected to the rear panel.

8. The rear longitudinal beam assembly according to claim 7, wherein the second induction structure further comprises a second connection section, the second connection section is disposed in the second interval, and the third connection plate and the seventh connection plate are connected by the second connection section;
the second connection section, the third connection plate and the seventh connection plate collectively form a second notch, and the second notch faces the rear panel.

9. The rear longitudinal beam assembly according to claim 8, wherein a first recess is disposed on the second side wall of the second longitudinal beam section, the first recess extends in a width direction of the second side wall, and the first recess is disposed to face the rear panel.

10. The rear longitudinal beam assembly according to claim 9, wherein a second recess is disposed on the third side wall of the second longitudinal beam section, the second recess extends in a width direction of the third side wall, and the second recess is disposed to face the rear panel;
and/or, a third recess is disposed on the fourth side wall of the second longitudinal beam section, the third recess extends in a width direction of the fourth side wall, and the third recess is disposed to face the rear panel.

11. The rear longitudinal beam assembly according to claim 1, wherein the first longitudinal beam section comprises a first sub-beam and a second sub-beam that are arranged in a length direction of the vehicle body;
the first sub-beam has a first groove, a plurality of spaced-apart partition ribs, and a plurality of reinforcement structures, the plurality of partition ribs are disposed within the first groove to divide the first groove into a plurality of energy absorption cavities arranged along a height direction of the vehicle body, and each reinforcement structure is disposed within one energy absorption cavity;
the second sub-beam is connected to the energy absorption cavity facing the top of the vehicle body, and the second sub-beam faces a rear of the vehicle body.

12. The rear longitudinal beam assembly according to claim 11, wherein the plurality of partition ribs comprise a first partition rib and a second partition rib that are arranged in the height direction of the vehicle body, the first partition rib faces the top of the vehicle body, and the first partition rib and the second partition rib are configured to divide the first groove into a first energy absorption cavity, a second energy absorption cavity and a third energy absorption cavity;
the plurality of reinforcement structures comprise a first reinforcement structure, a second reinforcement structure and a third reinforcement structure, the first reinforcement structure is disposed in the first energy absorption cavity, the second reinforcement structure is disposed in the second energy absorption cavity, and the third reinforcement structure is disposed in the third energy absorption cavity, the first energy absorption cavity faces the top of the vehicle body, the third energy absorption cavity faces a bottom of the vehicle body, the second energy absorption cavity is located between the first energy absorption cavity and the third energy absorption cavity, and the first energy absorption cavity is connected to the second sub-beam.

13. The rear longitudinal beam assembly according to claim 12, wherein the first reinforcement structure comprises a first rib plate and a second rib plate;
the first energy absorption cavity has a first wall surface opposite to the first partition rib, and the first wall surface faces away from the second energy absorption cavity;
one end of the first rib plate and one end of the second rib plate are both connected to the first wall surface, the other end of the first rib plate and the other end of the second rib plate are both connected to the first partition rib, and the first rib plate and the second rib plate are disposed to cross each other.

14. The rear longitudinal beam assembly according to claim 13, wherein the first reinforcement structure further comprises a third rib plate, and the third rib plate is located on a side of the first rib plate facing away from the second sub-beam;
one end of the third rib plate is connected to the first partition rib, and the other end of the third rib plate extends away from the second sub-beam and is connected to the first wall surface.

15. The rear longitudinal beam assembly according to claim 13, wherein the second reinforcement structure comprises a fourth rib plate;
the second energy absorption cavity comprises a first partition rib and a second partition rib disposed opposite to each other;
one end of the fourth rib plate is connected to an end of the second partition rib facing the second sub-beam, and the other end of the fourth rib plate is connected to an end of the first partition rib facing away from the second sub-beam.

16. The rear longitudinal beam assembly according to claim 15, wherein the second reinforcement structure further comprises a fifth rib plate;
the second energy absorption cavity further comprises a second wall surface, one end of the second wall surface is connected to the end of the first partition rib facing away from the second sub-beam, and the other end of the second wall surface is connected to an end of the second partition rib facing away from the second sub-beam;
one end of the fifth rib plate is connected to the second partition rib, and the other end of the fifth rib plate is connected to the second wall surface.

17. The rear longitudinal beam assembly according to claim 16, wherein the third reinforcement structure comprises a sixth rib plate and a seventh rib plate;
the third energy absorption cavity comprises a third wall surface disposed opposite to the second partition rib; one end of the sixth rib plate is connected to the second partition rib, and the other end of the sixth rib plate extends away from the second sub-beam and is connected to the third wall surface;
one end of the seventh rib plate is connected to an end of the sixth rib plate that is connected to the second partition rib, and the other end of the seventh rib plate extends toward the second sub-beam and is connected to the third wall surface.

18. The rear longitudinal beam assembly according to any one of claims 11 to 17, wherein the second sub-beam comprises a fourth energy absorption cavity and a fourth reinforcement structure;
the fourth energy absorption cavity is connected to the energy absorption cavity facing the top of the vehicle body among the plurality of energy absorption cavities of the first sub-beam, the fourth reinforcement structure is disposed within the fourth energy absorption cavity, and side walls of the fourth energy absorption cavity are connected by the fourth reinforcement structure.

19. The rear longitudinal beam assembly according to claim 18, wherein the fourth reinforcement structure comprises a first support section and a second support section;
the fourth energy absorption cavity has a fourth wall surface and a fifth wall surface that are oppositely disposed in the height direction of the vehicle body, and the fourth wall surface faces the top of the vehicle body;
one end of the first support section is connected to the fourth wall surface, the other end of the first support section extends away from the rear of the vehicle body and is connected to one end of the second support section, and the other end of the second support section extends toward the rear of the vehicle body and is connected to the fifth wall surface.

20. The rear longitudinal beam assembly according to claim 19, wherein the fourth reinforcement structure further comprises a third support section, a fourth support section and a third connection section;
one end of the third connection section is connected to a junction of the first support section and the second support section, the other end of the third connection section extends away from the rear of the vehicle body and is connected to one end of the third support section and one end of the fourth support section, the other end of the third support section extends away from the rear of the vehicle body and is connected to the fourth wall surface, and the other end of the fourth support section extends away from the rear of the vehicle body and is connected to the fifth wall surface.

21. A vehicle, comprising a vehicle body and the rear longitudinal beam assembly according to any one of claims 1 to 20 disposed on the vehicle body.
